# EUROPEAN PATENT SPECIFICATION

(11) **EP 3 156 793 B1**
(45) Date of publication and mention of the grant of the patent: **16.01.2019**
(21) Application number: 15190253.3
(22) Date of filing: 16.10.2015
(51) Int. Cl.: G01N 31/22

(54) **TESTING METHOD FOR SPECIFIC INGREDIENTS IN ANTIPERSPIRANT AND HUMECTANT COSMETIC COMPOSITIONS**
TESTVERFAHREN FÜR BESTIMMTE INGREDIENTIEN IN SCHWEISSHEMENDEN UND FEUCHTIGKEITSPENDENDEN KOSMETISCHEN ZUSAMMENSETZUNGEN
DE TEST POUR DES INGREDIENTS SPECIFIQUES DANS DES COMPOSITIONS COSMETIQUES ANTIPERSPIRANTES ET HUMECTANTES

(43) Date of publication of application: 19.04.2017
(73) Proprietor: Unilever PLC, London, Greater London EC4Y 0DY (GB); Unilever N.V., 3013 AL Rotterdam (NL)
(72) Inventor: TOMCZAK, Douglas Charles, Trumbull, Connecticut, 06611 (US); AGRAWAL, Nikhil, Trumbull, Connecticut, 06477 (US); MARRIOTT, Robert Edward, Bebington, Wirral, Merseyside, CH63 3JW (GB); GIBSON, Oliver Lawrence, Leeds, West Yorkshire, LS14 2AR (GB)
(74) Representative: McHugh, Paul Edward

(56) References cited:
- US-A- 4 690 815
- US-A1- 2011 020 943
- "Free Glycerol Reagent", , 13 November 2006 (2006-11-13), XP055257471, Retrieved from the Internet: URL:http://www.sigmaaldrich.com/content/da m/sigma-aldrich/docs/Sigma/Bulletin/f6428b ul.pdf [retrieved on 2016-03-11]
- Anonymous: "WATOR - Indicator Paper for Determination of Water distribution in butter According to DIN 10311", , 20 August 2008 (2008-08-20), XP055257377, Retrieved from the Internet: URL:ftp://ftp.mn-net.com/english/Instructi on_leaflets/Testpapers/90610en.pdf [retrieved on 2016-03-10]

## Description

The invention concerns a method for demonstrating the potential for a moisturisation effect from a cosmetic composition.

Cosmetic compositions contain a number of different ingredients to perform various functions. Some cosmetic compositions are intended to provide a moisturisation and/or antiperspirancy effect to the user. It is beneficial to be able to demonstrate the potential for a moisturisation and/or antiperspirancy effect from a cosmetic composition. The present invention addresses the first of these goals.

According to the present invention, there is provided a method of demonstrating the potential for a moisturisation effect from a cosmetic composition, said method comprising contacting the composition with a fibrous substrate comprising a detector substance for glycerol, said detector substance generating a visible colour change to directly indicate the presence of glycerol, wherein such method is carried out at relative humidity of less than 80%.

Advantageously, the fibrous substrate is paper.

Preferably, the cosmetic composition is an antiperspirant composition.

Advantageously, the cosmetic composition is in the form of a stick, aerosol, roll-on or cream.

Preferably, the cosmetic composition is in the form of a stick.

Advantageously, the detector substance comprises enzymes.

Conveniently, the detector substance comprises an inorganic salt and a pH indicator dye.

According to the invention, there is provided a method of distinguishing a cosmetic composition having a moisturisation effect from another cosmetic composition, said method comprising contacting the composition with a fibrous substrate comprising a detector substance for glycerol, said detector substance generating a visible colour change to directly indicate the presence of glycerol, wherein such method is carried out at relative humidity of less than 80%.

The invention will now be described, by way of example, with reference to the following figures in which:
FIGURE 1 is a photograph of three cosmetic compositions and a substrate prior to application,
FIGURE 2 is a photograph of the three cosmetic compositions immediately after application to the substrate,
FIGURE 3 is a photograph three minutes after application of the three cosmetic compositions to the substrate,
FIGURE 4 is a photograph showing a positive result from the application of a cosmetic composition to a test substrate,
FIGURE 5 is a photograph of a negative result of the application of a comparative cosmetic product to a test substrate,
FIGURE 6 is a photograph of PEG-8 applied to a test substrate under ambient conditions,
FIGURE 7 is a photograph of PEG-8 applied to a test substrate within a desiccator,
FIGURE 8 is a photograph showing the results of the application of the surfactant Tween-20 and PEG-8,
FIGURE 9 is a photograph showing the results of the application of two cosmetic compositions to a test substrate with two different dilutions of a test substance, and
FIGURE 10 is a photograph showing the results of the application of four cosmetic compositions to test substrates for the detection of glycerol and aluminium.

To perform the method, the cosmetic composition, which may for example be in the form of a stick, is contacted with the detector substance. The detector substance is present in or on a fibrous substrate, and the composition may be applied to the fibrous substrate. So, for example, the composition can be applied to the fibrous material, for example by applying a smear, and then the substrate can be monitored to see whether there is a colour change.

The method is carried out ambient humidity conditions: at relative humidity of less than 80%, particularly less than 70%. In one or more embodiments of particular interest the method is carried out at relative humidity of from 20 to 60%.

Compounds such as some polypropylene glycols and polyethylene glycols are used in cosmetic compositions to provide moisturising properties. These particular materials are humectants. In other words, such compounds help to retain moisture when applied to the skin of a user. The method relates to the demonstration of the presence of a moisturiser which is glycerol. Other preferred humectants include polyethylene glycols, polypropylene glycols, butylene glycols, pentylene glycols, hexylene glycols, isomers, dimers and trimers thereof, and other liquid "hydroxyl" humectants such as diglycerol and polyglycerol. A preferred humectant is PEG-8.

It would be beneficial to be able to provide a method of demonstrating the potential for a moisturisation effect from a cosmetic composition comprising the application of the composition to a fibrous substrate comprising a detector substance for glycerol, said detector substance generating a visible colour change to directly indicate the presence of glycerol, wherein such method is carried out at relative humidity of less than 80%. A preferred method of doing so comprises applying a cosmetic composition to a fibrous substrate comprising the detector substance and monitoring for a colour change.

The essential humectant is glycerol. The presence of glycerol as humectant can be detected by a suitable test, such as the "free glycerol reagent" obtainable from the Sigma Aldrich company. This particular reagent contains a number of enzymes and other components which can provide a visible colour change as an indication for the presence of glycerol in a test composition. For this particular reagent, a colour change to purple indicates a positive result.

In one aspect, a fibrous substrate can be used in the test which may be, for example, paper or card. The method can be used for compositions in the form of a stick and for compositions in non-stick forms, such as roll-on, aerosol or cream compositions. This is especially the case for methods relating to glycerol.

Other preferred moisturisers are triglycerides, such as those in sunflower seed oil.

In some cases, it is beneficial to dilute or soften the cosmetic composition for use in the method. For example, the composition may be mixed with a material to make it more fluid to facilitate the interaction with the detector substance. One material that can be used for this purpose is a volatile silicone such as cyclopentasiloxane.

The method of the invention was exemplified in relation to the presence of a humectant. Three different cosmetic compositions were assessed in the method. The components of each of the three cosmetic compositions that were used are set out below:
- Dove Nourished Beauty Stick
   Aluminium Zirconium Tetrachlorohydrex GLY, Cyclopentasiloxane, Stearyl Alcohol, C12-15 Alkyl Benzoate, PPG-14 Butyl Ether, Hydrogenated Castor Oil, PEG-8, Dimethicone, Fragrance (Parfum), Silica, Polyethylene, Helianthus Annuus (sunflower) Seed Oil, Steareth-100, BHT, Hydroxyethyl Urea
- Secret Outlast Completely Clean Invisible Solid
   Aluminium Zirconium Tetrachlorohydrex GLY, Cyclopentasiloxane, Stearyl Alcohol, C12-15 Alkyl Benzoate, PPG-14 Butyl Ether, Cyclodextrin, Petrolatum, Phenyl Trimethicone, Hydrogenated Castor Oil, Talc, Fragrance, Ozokerite, Behenyl Alcohol, Panthenyl Triacetate, Tocopheryl Acetate, Acetyl Glucosamine
- Lady Speed Stick Invisible Dry Powder Fresh Stick
   Aluminium Zirconium Tetrachlorohydrex GLY, Elaeis Guineensis (palm) Kernel Oil, Stearyl Alcohol, Cyclomethicone, C12-15 Alkyl Benzoate, PPG-14 Butyl Ether, Hydrogenated Castor Oil, Hydrogenated Soybean Oil, PEG-8 Distearate, Fragrance, Hydrolyzed Corn Starch, Behenyl Alcohol

Each of the cosmetic compositions were assessed in relation to demonstrating the potential for a moisturisation and/or antiperspirancy effect. The cosmetic compositions were applied to a fibrous substrate comprising a detector substance for moisture. In particular, the fibrous substrate used in the test was the "Wator" test paper obtainable from the Machery-Nagel company.

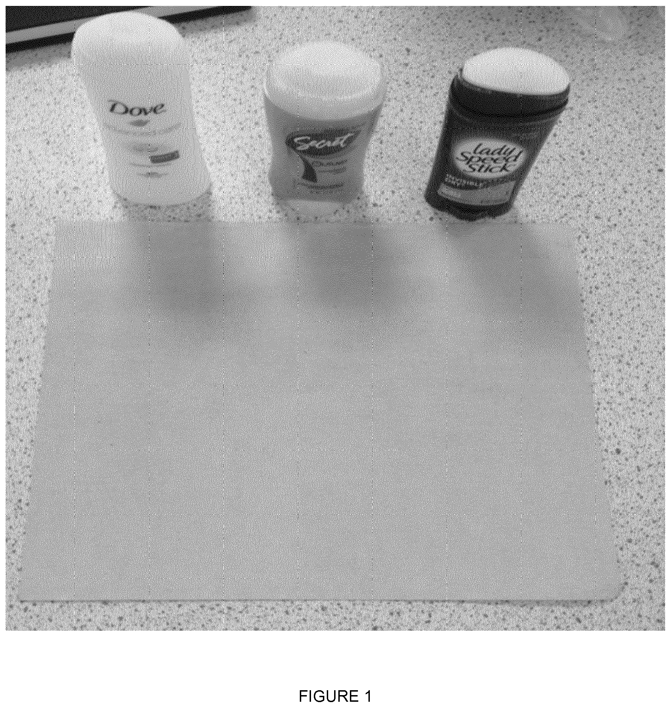

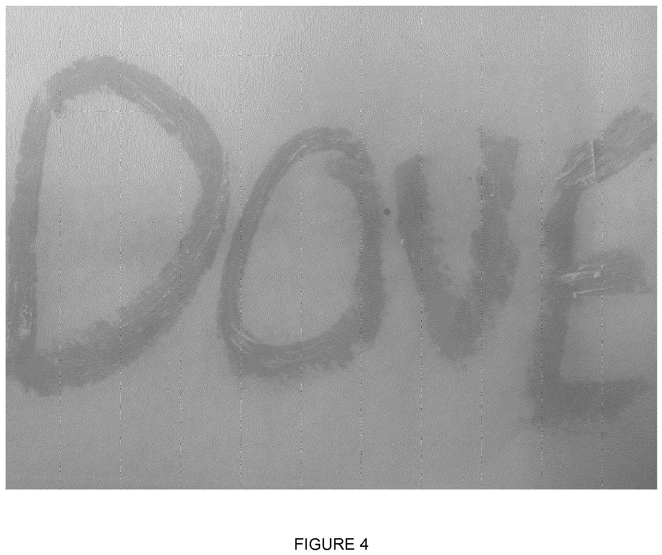

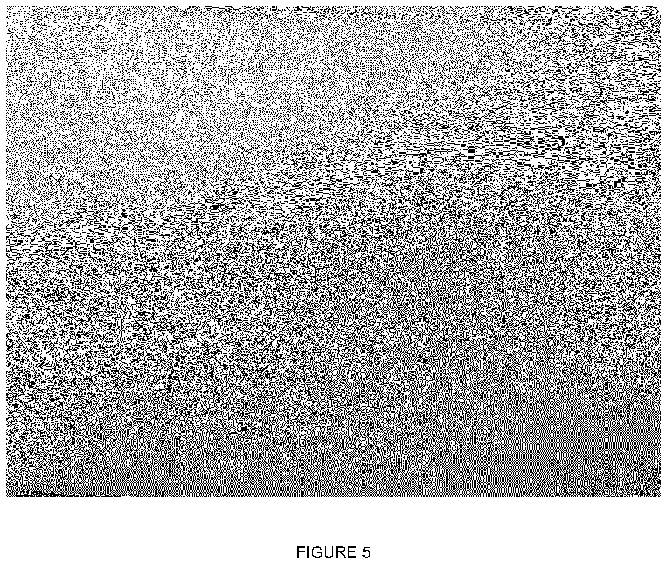

FIGURE 1 shows the three cosmetic compositions and a sheet of the fibrous test substrate prior to application.

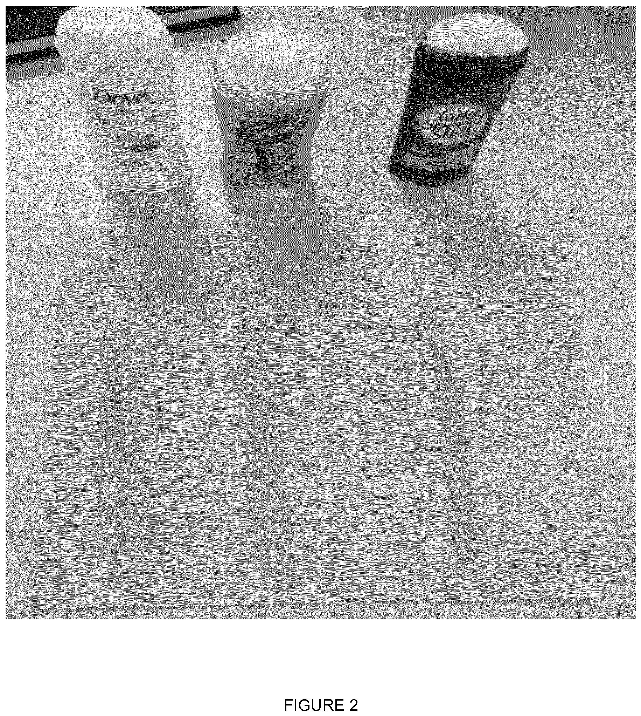

FIGURE 2 shows the situation where the cosmetic compositions, which were each in the form of a stick, have been applied to the fibrous substrate by drawing the sticks over the surface of the fibrous substrate. FIGURE 2 shows the situation immediately after application, with a smear of each product being visible on the test substrate. No colour change has yet occurred.

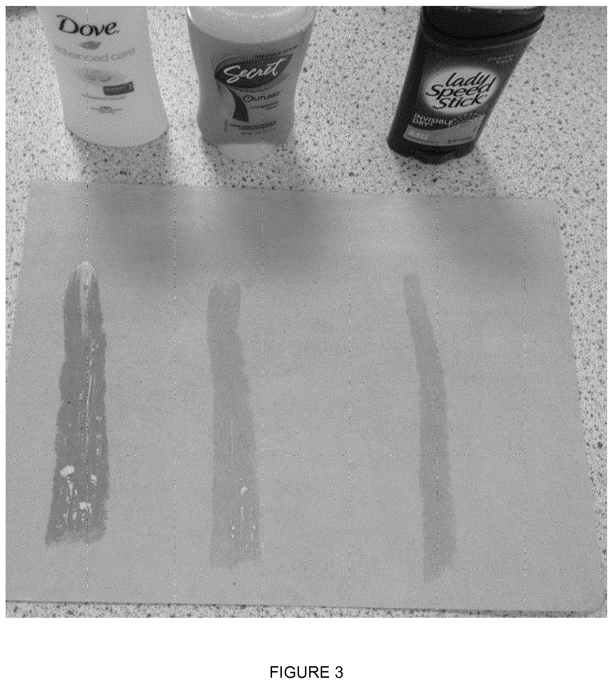

FIGURE 3 shows the situation three minutes after application. Only one of the three cosmetic compositions has produced a visible colour change, where the streak has turned blue. There is a positive colour change from the Dove Nourished Beauty Stick cosmetic composition, and there is no colour change (negative result) from the Secret Outlast Completely Clean Invisible Solid cosmetic composition and the Lady Speed Stick Invisible Dry Powder Fresh Stick cosmetic composition. The positive result is believed to be due to the inclusion of PEG-8 in the Dove Nourished Beauty Stick. The test demonstrates the potential for a moisturisation effect from the cosmetic composition.
The test protocol in general terms is set out below, and is described with reference to Figures 4 and 5.
The test comprises taking a piece of the test paper from its protective packaging immediately before the test. Before the test, the paper is kept in the packaging to avoid contact with environmental moisture, which could affect the results. Next, the cosmetic product to be tested is used to deposit material on the test substrate. This can either be in the form of a smear, or could also take the form of either text or a picture applied to the surface of the paper. After some time has elapsed, typically around three minutes, a visible colour change can be seen for cosmetic compositions having the potential for moisturisation. In particular, a positive test result can be seen for cosmetic composition containing PEG-8.
The method can be performed simultaneously with a cosmetic composition which does produce a positive result and also using a cosmetic composition which does not produce a positive result. FIGURE 4 shows the positive result resulting from the application of a cosmetic composition (Dove) which does contain the humectant PEG-8, whereas FIGURE 5 shows the negative result from the application of a comparative product which does not contain PEG-8. There is a visible colour change to indicate a positive result for the cosmetic composition that does contain the humectant PEG-8.

The "Wator" test paper is known to produce a positive result in the presence of moisture (water). To assess whether the positive result seen for cosmetic compositions containing a humectant such as PEG-8 is due to the presence of water, or the attraction of water from ambient environments, a further test was carried out.
In the test, two pieces of the test substrate paper were used. One of the pieces of paper was placed in a desiccator whilst the other was left out on a bench surface, in ambient conditions. To each piece, one drop of PEG-8 liquid was added and the paper was subsequently monitored for any positive reactions.

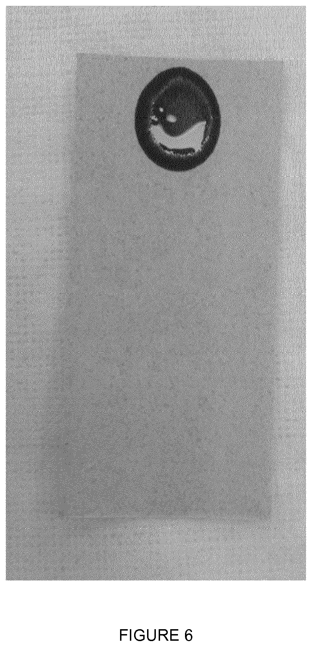

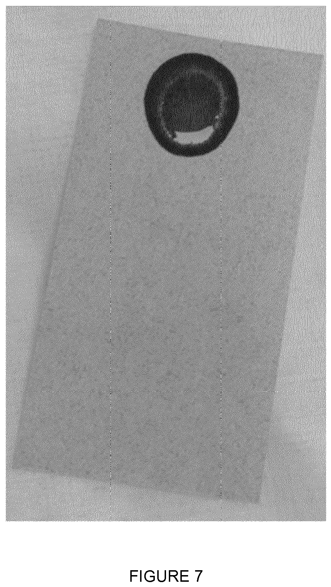

FIGURES 6 and 7 show the result of the test. Both papers reacted positively with PEG-8. FIGURE 6 shows the positive result from the addition of a drop of PEG-8 material to the test paper left open in ambient conditions. FIGURE 7 shows the positive result obtained from the addition of a drop of PEG-8 liquid to the test paper which was then kept within a desiccator. The test results indicate that the positive colour change is due to the addition of the PEG-8 liquid itself, rather than the attraction of ambient moisture to the test paper by the presence of the humectant in the cosmetic composition.

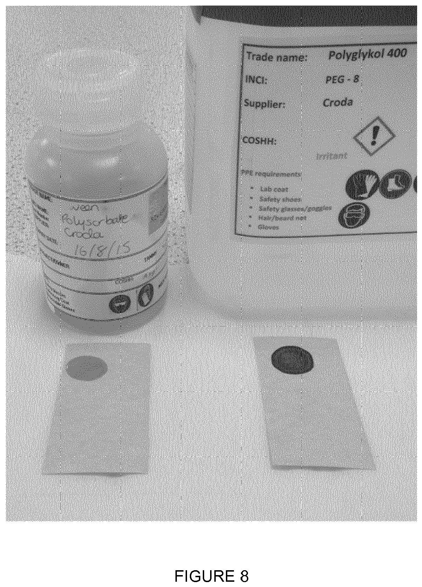

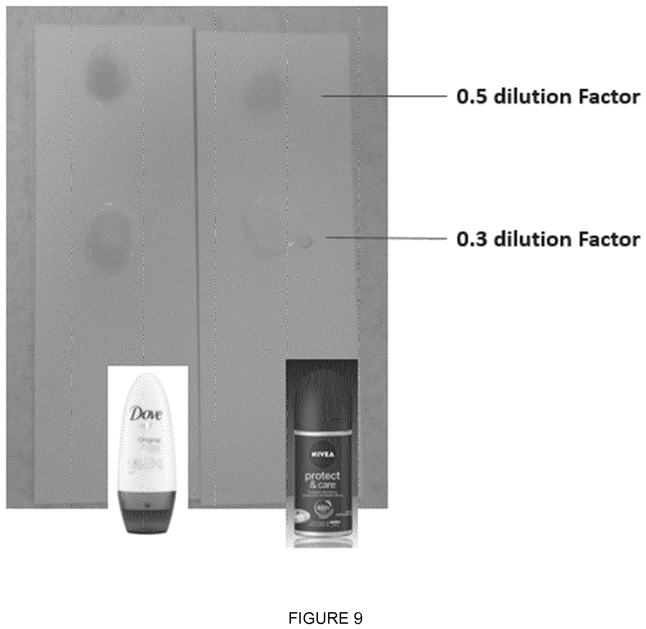

Commercially-available PEG-8 liquid, that is typically used in the preparation of cosmetic compositions, such as the Dove Advanced Care Stick range, contains a small amount of moisture. The water content of the PEG-8 liquid used is no more than 1 %. A further test was performed using the PEG-8 liquid alongside the commercially-available surfactant Tween-20. The commercially-available Tween-20 liquid contains a maximum moisture value of 3% water. The test was performed comprising addition a drop of each of the liquids to a test substrate and monitoring the results. Two pieces of moisture paper were placed on a bench top surface. To one piece of paper, one drop of PEG-8 was added. To the other piece of paper, one drop of Tween-20 was added. The products were then left to react with the paper.
As shown in FIGURE 8, PEG-8 reacted strongly with the "Wator paper", whereas Tween-20 failed to produce a positive test result. This seems to indicate that the presence of PEG-8 itself was producing the positive result, rather than the moisture present in either of the two compositions.
Another humectant used in commercial cosmetic compositions is glycerol. The method of the invention relates to a method of demonstrating the potential for a moisturisation effect from a cosmetic composition, using a fibrous substrate comprising a testing substance for glycerol. The presence of glycerol can be detected, for example, by the use of a glycerol assay kit obtainable from the Sigma Aldrich company. The commercially-available kit provides a means to determine glycerol concentrations by a coupled enzyme assay comprising glycerol kinase and glycerol phosphate oxidase, producing a colorimetric result. FIGURE 9 shows the results of an assay involving the detection of the humectant glycerol in a cosmetic composition.
The commercially-available glycerol assay test substance was used at dilution factors 0.5 and 0.3, where the detector substance was diluted using de-mineralised water. The results in FIGURE 9 show that the Dove composition produces a positive result for indicating the potential for a moisturisation effect from a cosmetic composition at dilution factors of 0.5 and 0.3. The Nivea product does not produce such a visible colour change at either the 0.3 or the 0.5 dilution factors. The composition of the two materials used in the test are set out below.
- Dove INCI
   Aqua, Aluminium Chlorohydrate, Helianthus Annuus Seed Oil (Seed), Glycerin, Steareth-2, Parfum, Steareth-20, Disodium EDTA, Tocopheryl Acetate, Alpha-isomethyl lonone, Benzyl Benzoate, Benzyl Salicylate, Butylphenyl Methylpropional, Citronellol, Geraniol, Hexyl Cinnamal, Hydroxycitronellal, Linalool
- Nivea INCI
   Aqua, Aluminium Chlorohydrate, PPG-15 Stearyl Ether, Steareth - 2, Steareth - 21, Parfum, Octyldodecanol, Persea Gratissima Oil, Glycerin, Panthenol, Trisodium EDTA, Geranil, Limonene, Citronellol, Butylphenyl Methylpropional, Alpha-Isomethyl lonone, Linalool

Another method can demonstrate the potential for an antiperspirancy effect from a cosmetic composition. One commonly used form of antiperspirant agent is aluminium compounds, and aluminium salts, such as aluminium chlorohydrate, aluminium zirconium chlorohydrates and aluminium zirconium chlorohydrate glycine complexes . A test for the presence of aluminium compounds could indicate the potential for an antiperspirancy effect from a cosmetic composition. Also, more than one test can be performed at the same time.

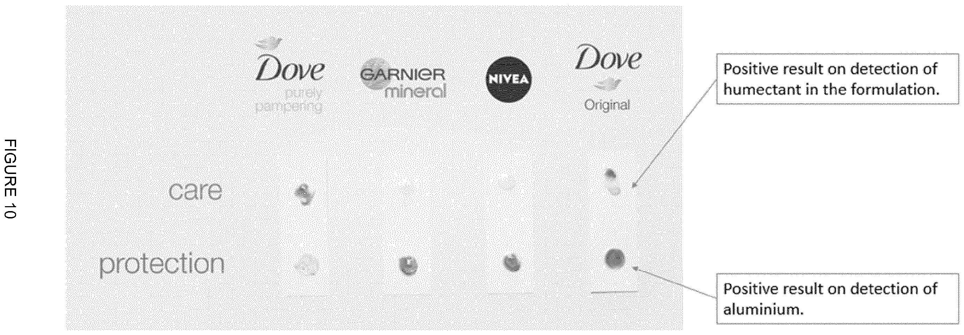

FIGURE 10 shows the results of tests for demonstrating the potential for a moisturisation and antiperspirancy effect from four different cosmetic compositions. The components of the four different cosmetic compositions tested are set out below:
- Dove Purely Pampering Moisturising Lotion
   Aqua, Glycerin, Stearic Acid, Caprylic/Capric Triglyceride, Dimethicone, Glycol Stearate, PEG-100 Stearate, Cyclopentasiloxane, Petrolatum, Butyrospermum Parkii Butter, Tocopheryl Acetate, Potassium Lactate, Sodium PCA, Helianthus Annuus Hybrid Oil (Hybrid), Isomerized Linoleic Acid (Isomerized), Urea, Collagen Amino Acids, Lactic Acid, Glyceryl Stearate, Stearamide AMP, Triethanolamine, Cetyl Alcohol, Acrylates/C10-30 Alkyl Acrylate Crosspolymer, Carbomer, Disodium EDTA, parfum, Phenoxyethanol, Methylparaben, Propylparaben, Coumarin, Hydroxyisohexyl 3-cyclohexene Carboxaldehyde, Titanium Dioxide
- Dove Original RO
   Aqua, Aluminium Chlorohydrate, Helianthus Annuus Seed Oil (Seed), Glycerin, Steareth-2, parfum, Steareth-20, Disodium EDTA, Tocopheryl Acetate, Alpha-isomethyl Ionone, Benzyl Benzoate, Benzyl Salicylate, Butylphenyl Methylpropional, Citronellol, Geraniol, Hexyl Cinnamal, Hydroxycitronellal, Linalool
- Garnier Mineral InvisiDry RO
   Aqua, Aluminium Chlorohydrate, Cetearyl Alcohol, Ceteareth-33, parfum (fragrance), Perlite, Phenoxyethanol, Dimethicone, L-limonene, Benzyl Salicylate, Benzyl Alcohol, Linalool, Geraniol, Citronellol, Methylisothiazolinone, Hexyl Cinnamal, F.I.L. C38465/1
- Nivea Powder Touch RO
   Aqua, Aluminium Chlorohydrate, PPG-15 Stearyl Ether, Steareth-2, Steareth-21, parfum, Kaolin, Persea Gratissima Oil, Trisodium EDTA, L-limonene, Linalool, Alpha-isomethyl Ionone, Geraniol, Benzyl Alcohol, Coumarin

The four different cosmetic compositions were assessed using a method of demonstrating the potential for moisturisation and an antiperspirancy effect. The first composition tested (Dove Purely Pampering) contains a humectant (glycerol) but no antiperspirant aluminium salts. As shown in FIGURE 10, this product therefore shows a positive change in relation to "care", in other words moisturisation but a negative result for an antiperspirancy effect.

The Garnier Mineral product shows a positive result for "protection", demonstrating the presence of aluminium salts for an antiperspirant effect. However, there is a negative result in terms of "care" or moisturisation for this product. The same is true of the Nivea product which again demonstrates an antiperspirant effect, but no moisturisation.

The last product (Dove Original) has a positive result for "care", demonstrating the presence of the humectant glycerol. The Dove Original product also demonstrates the potential for an antiperspirant effect, by the positive colour change for the presence of antiperspirant aluminium salts. The aluminium test results are due to the presence of the Chromeazurol S within the test substrate.

## Claims

1. A method of demonstrating the potential for a moisturisation effect from a cosmetic composition, said method comprising contacting the composition with a fibrous substrate comprising the detector substance for glycerol, said detector substance generating a visible colour change to directly indicate the presence of glycerol, wherein such method is carried out at relative humidity of less than 80%.

2. A method according to claim 1, wherein the fibrous substrate is paper.

3. A method according to anyone of the preceding claims, wherein the cosmetic composition is an antiperspirant composition.

4. A method according to anyone of the preceding claims wherein the cosmetic composition is in the form of a stick, aerosol, roll-on or cream.

5. A method according to anyone of the preceding claims, wherein the cosmetic composition is in the form of a stick.

## Patentansprüche

1. Verfahren zum Nachweis des Potenzials eines Befeuchtungseffekts einer kosmetischen Zusammensetzung, wobei das Verfahren das Inkontaktbringen der Zusammensetzung mit einem faserförmigen Substrat umfasst, umfassend die Detektorsubstanz für Glycerin, wobei die Detektorsubstanz ein sichtbare Farbänderung erzeugt, um direkt die Gegenwart von Glycerin anzuzeigen, wobei ein derartiges Verfahren bei einer relativen Luftfeuchtigkeit von weniger als 80% durchgeführt wird.

2. Verfahren nach Anspruch 1, wobei das faserförmige Substrat Papier ist.

3. Verfahren nach irgendeinem der vorhergehenden Ansprüche, wobei die kosmetische Zusammensetzung eine schweißhemmende Zusammensetzung ist.

4. Verfahren nach irgendeinem der vorhergehenden Ansprüche, wobei die kosmetische Zusammensetzung in der Form eines Stabes, Aerosols, Deorollers oder einer Creme vorliegt.

5. Verfahren nach irgendeinem der vorhergehenden Ansprüche, wobei die kosmetische Zusammensetzung in der Form eines Stabes vorliegt.

## Revendications

1. Procédé de démonstration du potentiel d'un effet d'hydratation à partir d'une composition cosmétique, ledit procédé comprenant la mise en contact de la composition avec un substrat fibreux comprenant la substance de détecteur pour du glycérol, ladite substance de détecteur générant une modification de couleur visible pour indiquer directement la présence de glycérol, dans lequel un tel procédé est réalisé à une humidité relative inférieure à 80 %.

2. Procédé selon la revendication 1, dans lequel le substrat fibreux est du papier.

3. Procédé selon l'une quelconque des revendications précédentes, dans lequel la composition cosmétique est une composition d'antiperspirant.

4. Procédé selon l'une quelconque des revendications précédentes, dans lequel la composition cosmétique est dans la forme d'un stick, d'un aérosol, d'un roll-on ou d'une crème.

5. Procédé selon l'une quelconque des revendications précédentes, dans lequel la composition cosmétique est dans la forme d'un stick.
